# EUROPÄISCHE PATENTSCHRIFT

(11) **EP 1 893 459 B1**
(45) Veröffentlichungstag und Bekanntmachung des Hinweises auf die Patenterteilung: **21.04.2010**
(21) Anmeldenummer: 06762083.1
(22) Anmeldetag: 19.06.2006
(51) Int. Cl.: B60T 11/30, F16K 24/04

(54) **ENTLÜFTUNGSSCHRAUBE MIT RÜCKSCHLAGVENTIL**
VENTING SCREW COMPRISING A CHECK VALVE
VIS D'EVACUATION D'AIR A SOUPAPE DE NON-RETOUR

(30) Priorität: 20.06.2005 DE 102005028645
(43) Veröffentlichungstag der Anmeldung: 05.03.2008
(73) Patentinhaber: Maszull, Martin, 45527 Hattingen (DE); Rösler, Peter, 42551 Velbert (DE); Wittrock, Thomas, 44803 Bochum (DE)
(72) Erfinder: Maszull, Martin, 45527 Hattingen (DE); Rösler, Peter, 42551 Velbert (DE); Wittrock, Thomas, 44803 Bochum (DE)
(74) Vertreter: Isfort, Olaf
(86) Internationale Anmeldenummer: PCT/EP2006/005858
(87) Internationale Veröffentlichungsnummer: WO 2006/136354

(56) Entgegenhaltungen:
- WO-A-00/40445
- US-A- 2 729 228
- US-A- 2 892 614
- US-A- 4 524 800
- US-A- 4 834 140

## Beschreibung

Die Erfindung betrifft eine Entlüftungsvorrichtung nach dem Oberbegriff von Patentanspruch 1.

Derartige Entlüftungsvorrichtungen eignen sich z. B. zum Entlüften von Bremsleitungen von hydraulischen Bremssystemen oder auch zum Entlüften der Hydrauliksysteme von hydraulischen Kupplungen. Im Folgenden wird hauptsächlich der Einsatz von Entlüftungsvorrichtungen zum Entlüften der hydraulischen Bremssysteme von Kraftfahrzeugen beschrieben. Die Erfindung betrifft jedoch eine Entlüftungsvorrichtung, die auch für jedes andere hydraulische System geeignet ist.

Bekanntlich müssen hydraulische Bremsanlagen, wenn sie mit Bremsflüssigkeit gefüllt werden, an den einzelnen Bremsen entlüftet werden, um sicherzustellen, dass das gesamte System einschließlich der Bremsleitungen ausschließlich mit Hydraulikflüssigkeit gefüllt ist und keine Luft enthält. Da Luft kompressibel ist, würde im Falle von Lufteinschlüssen im Bremssystem die Bremskraft nur unzureichend bzw. mit Verzögerung auf die Bremse übertragen werden.

Es ist allgemein üblich, bei Fahrzeugen an den Bremsen jeweils eine Entlüftungsvorrichtung vorzusehen. Diese Entlüftungsvorrichtung ist meistens in Form einer Entlüftungsschraube ausgebildet. Diese weist einen Dichtkonus auf, der eine Öffnung des hydraulischen Bremssystems abdichtend verschließt. Zum Entlüften kann die Entlüftungsschraube gelockert werden, so dass Luft an dem Dichtkonus vorbei durch einen Entlüftungsdurchlass entweichen kann. Meist handelt es sich bei dem Entlüftungsdurchlass um eine axiale Entlüftungsbohrung der Entlüftungsschraube. Nach dem Entweichen der Luft wird die Entlüftungsschraube festgezogen, wobei der Dichtkonus fest gegen den metallischen Sitz der Bremse gedrückt wird. Dieser Anpressdruck muss relativ groß sein, um ein Losdrehen der Entlüftungsschraube durch Vibrationen und andere mechanische Beanspruchungen zu verhindern.

Weiterhin ist es bekannt, auf die Entlüftungsschraube eines hydraulischen Bremssystems beim Entlüften einen Entlüftungsschlauch aufzustecken, dessen freies Ende in einem Gefäß endet, in das die Hydraulik- bzw. Bremsflüssigkeit abfließt. Dabei kann das Austreten von Luft in Form von Blasen in der Hydraulikflüssigkeit aus dem System beobachtet werden.

Eine Entlüftungsvorrichtung der zuvor beschriebenen Art ist beispielsweise in der deutschen Auslegeschrift 22 27 453 (DE 2227453 B2) offenbart. Bei der aus dieser Druckschrift vorbekannten Entlüftungsvorrichtung wird auf die Entlüftungsschraube ein Rückschlagventil aufgesteckt, das aus einer umgestülpten Gummihülse besteht. Dieses Rückschlagventil hat die Funktion, den Rücktritt von Luft in das hydraulische Bremssystem zu verhindern.

Die vorbekannten Entlüftungsvorrichtungen haben eine Reihe von Nachteilen.

Bei Fahrzeugen mit konventionellen Entlüftungsschrauben erfolgt der Entlüftungsvorgang des Bremssystems derart, dass bei geöffneter Entlüftungsschraube der Bremszylinder betätigt wird. Dabei werden die in dem Bremssystem befindliche Luft und die Bremsflüssigkeit durch die Entlüftungsschraube und den aufgesteckten Entlüftungsschlauch in das bereitstehende Gefäß gedrückt. Bei vollständig betätigtem Bremszylinder wird die Entlüftungsschraube nun wieder geschlossen, um ein Zurückströmen von Bremsflüssigkeit bzw. ein Ansaugen von Luft in das Bremssystem zu verhindern. Dann wird der Bremszylinder entlastet, bevor die Entlüftungsschraube geöffnet und der Vorgang wiederholt wird. Um das hydraulische Bremssystem vollständig zu entlüften, muss dieser Zyklus mehrfach wiederholt werden. In der Regel sind hierzu zwei Personen erforderlich, nämlich eine Person, die den Bremszylinder betätigt, und eine Person, die die Entlüftungsschraube abwechselnd öffnet und schließt. Somit ist das übliche Vorgehen zum Befüllen bzw. Entlüften von Bremsanlagen - schon wegen des erforderlichen Personaleinsatzes - nachteiligerweise umständlich und aufwendig.

Nachteilig ist bei den bekannten Entlüftungsschrauben des Weiteren, dass bei gelöster Schraube Bremsflüssigkeit über das Gewinde seitlich an der Entlüftungsschraube vorbei aus dem Bremssystem herausgedrückt wird. Diese Bremsflüssigkeit kann auf Karosserieteile des Fahrzeugs gelangen und dort aufgrund ihrer aggressiven Eigenschaften Lackschäden verursachen.

Zwar ist mit einer Entlüftungsschraube, die gemäß der oben erwähnten Auslegeschrift 22 27 453 (DE 2227453 B2) mit einem Rückschlagventil ausgestattet ist, der Entlüftungsvorgang vereinfacht. Allerdings lassen sich die zuletzt angesprochenen Probleme, die aus unvermeidbaren Undichtigkeiten im Bereich des Gewindes der gelösten Entlüftungsschraube resultieren, durch die Verwendung des Rückschlagventils nicht beseitigen. Hinzu kommt das Problem, dass aufgrund der Undichtigkeit im Bereich des Gewindes der gelösten Entlüftungsschraube immer wieder Luft angesaugt wird, wenn der Bremszylinder entlastet wird. Somit verbleit stets Restluft im Bremssystem, was das Rückschlagventil bei der vorbekannten Entlüftungsschraube nicht verhindern kann.

Eine Entlüftungsvorrichtung mit den Merkmalen des Oberbegriffs des Patentanspruchs 1 ist aus der internationalen Veröffentlichung WO 00/40445 A1 bekannt. Diese eignet sich nachteiligerweise nicht zur Befüllung mittels einer Vakuumpumpe. Durch das Vakuum würde sich der Ventilkörper nicht gegen die Kraft der Feder von dem Ventilsitz abheben lassen. Die mittels der Vakuumpumpe erzeugte Druckluft reicht hierzu nicht aus.

Vor diesem Hintergrund ist es Aufgabe der Erfindung, eine Entlüftungsvorrichtung bereitzustellen, die einfach und mit geringem Aufwand handhabbar ist. Außerdem soll zuverlässig verhindert werden, dass während des Entlüftungsvorgangs unkontrolliert Luft in das Bremssystem angesaugt bzw. Bremsflüssigkeit aus diesem herausgedrückt wird. Weiterhin soll eine Entleerung bzw. Befüllung des Hydrauliksystems mittels Vakuum ermöglicht werden.

Diese Aufgabe löst die Erfindung durch eine Entlüftungsvorrichtung mit den Merkmalen des Patentanspruchs 1.

Die erfindungsgemäße Entlüftungsvorrichtung zeichnet sich durch die spezielle Ausgestaltung der Ventilanordnung aus. Diese funktioniert nach dem Prinzip eines Rückschlagventils, wobei das Ventil durch den Druck innerhalb der Bremsleitung beim Entlüftungsvorgang gegen die Kraft des Federelementes geöffnet wird. Die Ventilanordnung der erfindungsgemäßen Entlüftungsvorrichtung öffnet somit erst bei Überschreitung eines bestimmten Drucks innerhalb des Bremssystems. Wenn das Bremssystem druckentlastet wird, schließt das Ventil, indem der Ventilkörper durch die Kraft des Federelementes in den Ventilsitz gedrückt wird. Somit wird wirksam verhindert, dass Luft unkontrolliert in das Bremssystem angesaugt wird. Bei Beginn des Entlüftungsvorgangs wird die erfindungsgemäße Entlüftungsvorrichtung in die Entlüftungsstellung gebracht, so dass sich der Ventilkörper gegen die Kraft des Federelementes bewegen kann. Nach vollständiger Entlüftung wird die erfindungsgemäße Vorrichtung in die Schließstellung gebracht, in der der Ventilkörper an dem Ventilsitz festgelegt ist, so dass er sich nicht mehr bewegen kann. In der Schließstellung ist somit sichergestellt, dass das Bremssystem abgedichtet ist. Durch den Bremsdruck kann die Ventilanordnung in der Schließstellung nicht geöffnet werden. Somit wird deutlich, dass die erfindungsgemäße Entlüftungsvorrichtung besonders einfach und zuverlässig handhabbar ist. Die Entlüftungsvorrichtung muss lediglich bei Beginn des Entlüftungsvorgangs in die Offenstellung gebracht werden. Dann wird solange der Bremszylinder betätigt, bis kein Austreten von Luft durch den Entlüftungsdurchlass mehr zu beobachten ist. Schließlich wird die Entlüftungsvorrichtung wieder in die Schließstellung gebracht. Ein permanentes Öffnen und Schließen während des Entlüftungsvorgangs ist nicht erforderlich.

Bei der erfindungsgemäßen Entlüftungsvorrichtung ist ein Halteelement vorgesehen, mittels welchem der Ventilkörper in einer Offenstellung der Entlüftungsvorrichtung dauerhaft von dem Ventilsitz abhebbar ist. Somit weist die erfindungsgemäße Entlüftungsvorrichtung drei Stellungen auf, nämlich die Offenstellung zum Ablassen des Hydraulikfluids aus dem hydraulischen System bzw. zum Befüllen des Hydrauliksystems mit Hydraulikfluid, die Entlüftungsstellung zum Entlüften des Hydrauliksystems, und die Schließstellung, in welcher das Hydrauliksystem vollständig geschlossen und gegenüber der Umgebung abgedichtet ist. Das Halteelement gewährleistet, dass der Ventilkörper in der Offenstellung aktiv von dem Ventilsitz abhebbar ist. Dies ist Voraussetzung dafür, eine Befüllung des Hydrauliksystems mit Hilfe einer Vakuumpumpe vornehmen zu können. Die Vakuumpumpe wird an die Entlüftungsvorrichtung angeschlossen und mit dem Entlüftungsdurchlass der Entlüftungsvorrichtung verbunden. Allein durch das Vakuum würde sich der Ventilkörper nicht gegen die Kraft des Federelementes von dem Ventilsitz abheben lassen. Zur Befüllung mittels Vakuumpumpe ist das Halteelement daher unerlässlich.

Bei der erfindungsgemäßen Entlüftungsvorrichtung ist ein in das hydraulische System einschraubbarer Schraubenkörper vorgesehen, wobei der Entlüftungsdurchlass als axialer Entlüftungskanal ausgebildet ist, der sich durch den Schraubenkörper erstreckt, wobei der Ventilkörper in dem Entlüftungskanal axial beweglich geführt ist, und zwar in der Weise, dass in der Entlüftungsstellung und in der Offenstellung Hydraulikfluid oder Luft in dem Entlüftungskanal seitlich an dem Ventilkörper vorbeiströmen können. Der Schraubenkörper der erfindungsgemäßen Entlüftungsvorrichtung ersetzt eine herkömmliche Entlüftungsschraube. Gemäß der Erfindung ist die Ventilanordnung in die Schraube integriert. Das zuvor erwähnte Halteelement ist als ein mit dem Schraubenkörper verbundener Haltekäfig ausgebildet, welcher den Ventilkörper aufnimmt. Somit sind sämtliche für die Funktion der erfindungsgemäßen Entlüftungsvorrichtung wesentlichen Elemente integraler Bestandteil der Schraube. Der Haltekäfig kann wenigstens zwei axial ausgerichtete Halteklauen umfassen, die mit Abstand zueinander um den Entlüftungskanal herum angeordnet sind. Die Halteklauen greifen an dem Ventilkörper an und bewirken, dass dieser in der Offenstellung der Entlüftungsvorrichtung aktiv von dem Ventilsitz abgehoben wird.

Zur Nachrüstung eines für eine herkömmliche Entlüftungsschraube ausgelegten Hydrauliksystems mit der erfindungsgemäßen Entlüftungsvorrichtung ist der Schraubenkörper zweiteilig ausgebildet ist. Dabei umfasst der Schraubenkörper ein Kopfteil und ein mit dem Kopfteil verschraubbares Fußteil, wobei sich der Entlüftungskanal durch das Kopfteil und das Fußteil des Schraubenkörpers erstreckt. Das Fußteil erfüllt gleichsam die Funktion eines Adapterstückes zwischen dem Kopfteil des Schraubenkörpers, in welches die wesentlichen Funktionselemente der erfindungsgemäßen Entlüftungsvorrichtung integriert sind, und der zugehörigen Einschrauböffnung des Hydrauliksystems. Der Ventilsitz der Ventilanordnung ist dabei an dem Fußteil des Schraubenkörpers ausgebildet, wobei sich das Federelement an dem Kopfteil abstützt. In der Entlüftungsstellung der Entlüftungsvorrichtung kann der Ventilkörper innerhalb des Schraubenkörpers gegen die Kraft des Federelementes bewegt werden. Um die Entlüftungsvorrichtung aus der Entlüftungsstellung in die Schließstellung zu bringen, wird das Kopfteil des Schraubenkörpers an dem Fußteil festgezogen. Dabei wird gleichzeitig der Ventilkörper an dem Ventilsitz des Fußteils festgelegt, so dass das Rückschlagventil nach Beendigung des Entlüftungsvorgangs blockiert ist. Der Haltekäfig für den Ventilkörper ist mit dem Kopfteil des Schraubenkörpers verbunden. In der Offenstellung ist das Kopfteil des Schraubenkörpers soweit gelöst, dass der Ventilkörper aktiv von dem am Fußteil ausgebildeten Ventilsitz abgehoben wird.

Zweckmäßigerweise ist bei der erfindungsgemäßen Entlüftungsvorrichtung der Schraubenkörper an seinem oberen Ende mit einem Anschlussnippel zum Aufstecken eines Entlüftungsschlauchs versehen. Mittels des Entlüftungsschlauchs kann die aus der Bremsleitung abgelassene Bremsflüssigkeit in ein entsprechendes Gefäß geführt werden. Gleichzeitig kann so das Austreten von Luft aus dem Bremssystem beobachtet werden.

Des Weiteren sollte das Fußteil des Schraubenkörpers bei der erfindungsgemäßen Entlüftungsvorrichtung einen Gewindeabschnitt zum Einschrauben des Fußteils in das Hydrauliksystem (beispielsweise in einen Bremssattel) aufweisen und an seinem unteren Ende mit einem Dichtkonus zur dichtenden Verbindung mit dem Hydrauliksystem ausgestattet sein. Eine in dieser Weise ausgestaltete Entlüftungsvorrichtung kann als Ersatz, beispielsweise zum Nachrüsten, von herkömmlichen Entlüftungsschrauben dienen. Hierzu muss der Gewindeabschnitt am Fußteil des Schraubenkörpers mit dem Gewinde einer herkömmlichen Entlüftungsschraube übereinstimmen, und ebenso muss der Dichtkonus entsprechend einer herkömmlichen Entlüftungsschraube ausgebildet sein.

Der aus Kopfteil und Fußteil bestehende Schraubenkörper der erfindungsgemäßen Entlüftungsvorrichtung ist besonders vorteilhaft, da das Fußteil in das Hydrauliksystem fest eingeschraubt wird, so dass Undichtigkeiten im Bereich des Gewindes zwischen Bremse und Schraubenkörper niemals auftreten können. Zum Öffnen der Entlüftungsvorrichtung wird nicht - wie bei herkömmlichen Entlüftungsschrauben - die Verbindung zwischen Schraubenkörper und Bremse gelockert, sondern es wird die Schraubverbindung zwischen Kopfteil und Fußteil des Schraubenkörpers soweit gelöst, dass sich der Ventilkörper der Ventilanordnung innerhalb des Schraubenkörpers bewegen kann. Es ist dann zweckmäßig, dass das Kopfteil und das Fußteil dichtend aneinander geführt sind, damit keine Bremsflüssigkeit unkontrolliert aus dem Entlüftungskanal zwischen Kopfteil und Fußteil austreten kann.

Eine besonders praktisch und kostengünstig herstellbare Variante der erfindungsgemäßen Entlüftungsvorrichtung ergibt sich, wenn der Ventilkörper kugelförmig ausgebildet ist. Als Federelement kann beispielsweise eine einfache Schraubenfeder verwendet werden. Gemäß einer besonders bevorzugten Ausführungsform weist der Schraubenkörper einen kragenförmigen Aufnahmeabschnitt für die Schraubenfeder auf, wobei der Durchmesser des Aufnahmeabschnitts kleiner ist als der Durchmesser des Ventilkörpers. Der Ventilkörper wird dann in der Schließstellung zwischen dem endseitigen Ringbund des Aufnahmeabschnitts und dem (z. B. konusförmig ausgebildeten) Ventilsitz eingeklemmt.

Im einfachsten Fall besteht die erfindungsgemäße Entlüftungsvorrichtung aus nur drei Teilen. Dies sind der Schraubenkörper, der Ventilkörper und das Federelement. Hinzu kommt ggf. ein Dichtelement, beispielsweise in Form eines O-Rings, damit für eine ausreichende Abdichtung im Gewindebereich gesorgt ist. Das Austreten von Hydraulikfluid im Bereich des Gewindes sollte in jedem Fall verhindert werden.

Ausführungsbeispiele der Erfindung werden im Folgenden unter Bezugnahme auf die Zeichnungen näher erläutert. Es zeigen:
- Fig. 1: teilweise geschnittene Seitenansicht einer Entlüftungsvorrichtung im demontierten Zustand (kein Ausführungsbeispiel der Erfindung);
- Fig. 2: geschnittene Seitenansicht der Entlüftungsvorrichtung in der Schließstellung (kein Ausführungsbeispiel der Erfindung);
- Fig. 3: Entlüftungsvorrichtung in der Entlüftungsstellung (kein Ausführungsbeispiel der Erfindung);
- Fig. 4: teilweise geschnittene Seitenansicht einer erfindungsgemäßen Entlüftungsvorrichtung;
- Fig.5: geschnittene Seitenansicht der Entlüftungsvorrichtung gemäß Fig. 4 in den verschiedenen Funktionsstellungen;
- Fig. 6: erfindungsgemäße Entlüftungsschraube mit entsprechend angepasstem Bremssattel.

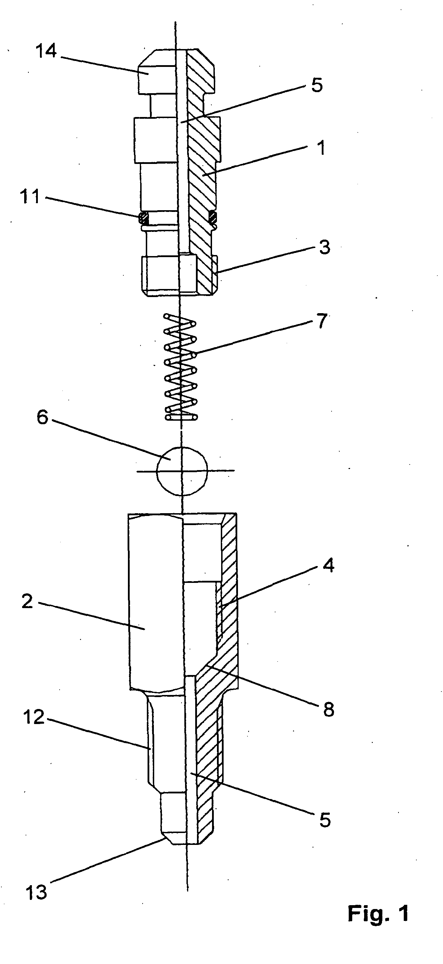

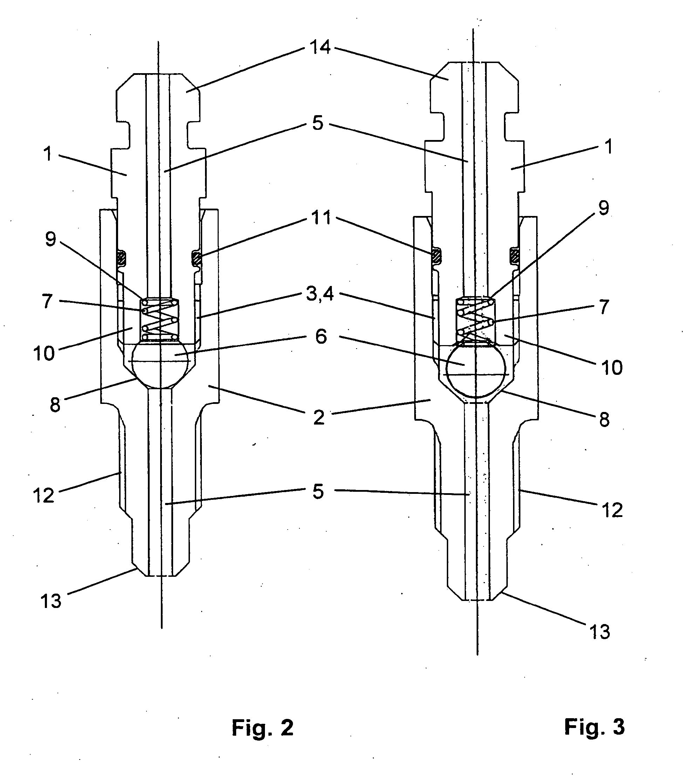

Die in den Figuren 1 bis 3 gezeigte Entlüftungsvorrichtung dient zum Befüllen und Entlüften einer nicht näher dargestellten Bremsleitung eines hydraulischen Bremssystems. Die Entlüftungsvorrichtung besteht aus einem in das Bremssystem einschraubbaren, zweiteiligen Schraubenkörper. Dieser umfasst ein Kopfteil 1 sowie ein Fußteil 2. Über ein Außengewinde 3 des Kopfteils 1 und ein zugehöriges Innengewinde 4 des Fußteils 2 ist das Kopfteil 1 mit dem Fußteil 2 verschraubbar. Die Entlüftungsvorrichtung weist einen Entlüftungsdurchlass auf. Dieser ist bei dem in den Figuren dargestellten Ausführungsbeispiel als axialer Entlüftungskanal 5 ausgebildet, der sich durch das Kopfteil 1 und das Fußteil 2 hindurch erstreckt. Des Weiteren weist die Entlüftungsvorrichtung eine Ventilanordnung auf, die nach Art eines Rückschlagventils arbeitet. Die Ventilanordnung umfasst einen kugelförmigen Ventilkörper 6, der gegen die Kraft einer Schraubefeder 7 von einer konusförmigen Ventilsitzfläche 8 innerhalb des Fußteils 2 abhebbar ist. Dabei stützt sich die Feder 7 an einer ringförmigen Schulter 9 innerhalb des Kopfteils 1 ab. Das Kopfteil 1 des Schraubenkörpers weist, was in den Fig. 2 und 3 gut zu erkennen ist, an seinem unteren Ende einen kragenförmigen Aufnahmeabschnitt 10 für die Schraubenfeder 7 auf. Dieser ergibt sich durch eine Stufenbohrung innerhalb des Kopfteils 1. Im Bereich des Aufnahmeabschnitts 10 ist die axiale Bohrung des Kopfteils 1 gegenüber dem Entlüftungskanal 5 erweitert. Dabei ist der Durchmesser jedoch immer noch kleiner als derjenige des kugelförmigen Ventilkörpers 6. Dadurch ist gewährleistet, dass der Ventilkörper, wie in der Fig. 2 gezeigt, in der Schließstellung zwischen dem endseitigen Ringbund des Aufnahmeabschnitts 10 und dem konusförmig ausgebildeten Ventilsitz 8 eingeklemmt ist. Diese Stellung wird durch Festziehen des Kopfteils 1 an dem Fußteil 2 erreicht.

Die Entlüftungsvorrichtung wird in die Entlüftungsstellung, die in der Fig. 3 gezeigt ist, gebracht, indem das Kopfteil 1 durch Drehung relativ zum Fußteil 2 gelöst wird. Dabei bewegt sich das Kopfteil 1 relativ zum Fußteil 2 nach oben, und der Ventilkörper 6 erhält die Möglichkeit, sich innerhalb des Schraubenkörpers axial zu bewegen. Beim Entlüften der Bremsanlage wird der Ventilkörper 6 gegen die Kraft der Feder 7 von dem Ventilsitz 8 der dargestellten Ventilanordnung abgehoben, so dass Bremsflüssigkeit bzw. Luft durch den Entlüftungskanal 5 des Fußteils 2 seitlich an dem Ventilkörper 6 vorbei und dann durch den Entlüftungskanal 5 des Kopfteils 1 hindurch aus der Bremsleitung abgelassen werden kann. Bei Nachlassen des Drucks im Bremssystem wird der Ventilkörper 6 in der Entlüftungsstellung der Entlüftungsvorrichtung von der Feder 7 in den Ventilsitz 8 gedrückt, so dass ein Ansaugen von Luft aus der Umgebung in das Bremssystem ausgeschlossen ist. Undichtigkeiten im Bereich des Gewindes 3 bzw. 4 beeinträchtigen die Funktion der erfindungsgemäßen Entlüftungsvorrichtung nicht, da das Kopfteil 1 und das Fußteil 2 mittels eines in einer Ringnut des Kopfteils 1 liegenden O-Rings 11 dichtend aneinander geführt sind. Somit kann keine Bremsflüssigkeit unkontrolliert durch den Ringspalt zwischen Kopfteil 1 und Fußteil 2 des Schraubenkörpers austreten.

Die in den Figuren 1 bis 3 dargestellte Entlüftungsvorrichtung ist als Ersatz für herkömmliche Entlüftungsschrauben vorgesehen. Aus diesem Grund weist das Fußteil 2 einen Gewindeabschnitt 12 zum Einschrauben des Fußteils 2 in das Bremssystem auf. Am unteren Ende des Fußteils 2 ist ein Dichtkonus 13 zur dichtenden Verbindung mit der zu entlüftenden Bremsleitung vorgesehen.

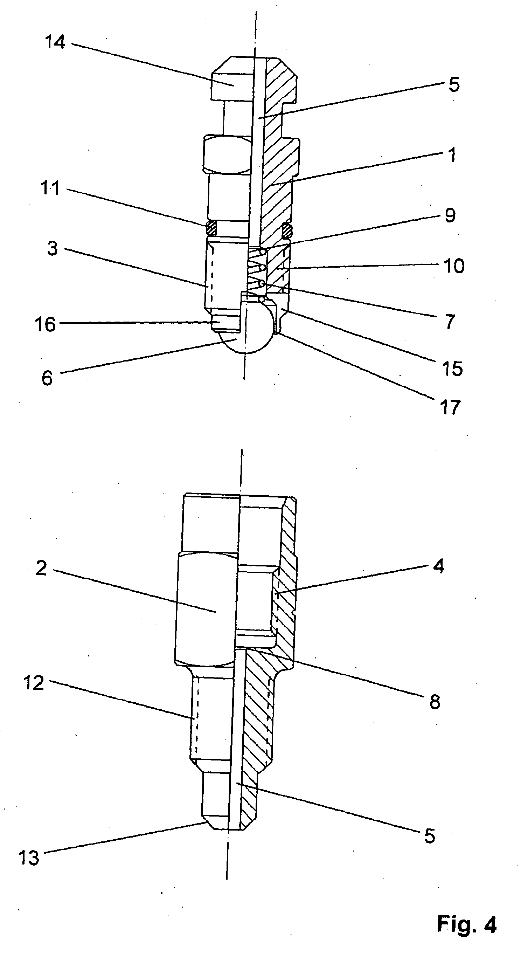

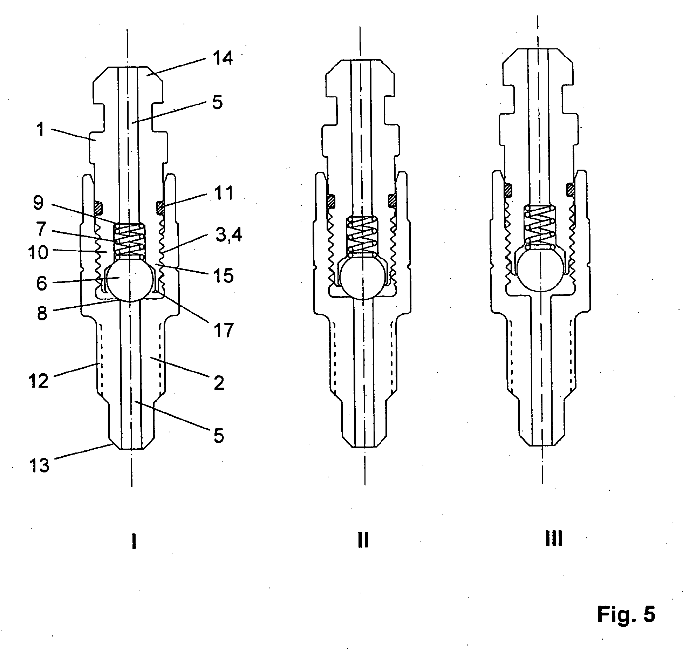

Das in den Figuren 4 und 5 dargestellte Ausführungsbeispiel der erfindungsgemäßen Entlüftungsvorrichtung unterscheidet sich von der Entlüftungsvorrichtung gemäß den Figuren 1 bis 3 durch einen zusätzlichen Haltekäfig 15 an der Unterseite des Kopfteils 1. Der Haltekäfig nimmt den kugelförmigen Ventilkörper 6 auf, so dass dieser durch Losdrehen des Kopfteils 1 von dem Fußteil 2 aktiv von dem Ventilsitz 8 abgehoben werden kann. Dies ist erforderlich, damit ein Befüllen der Bremsanlage mit Bremsflüssigkeit mit Hilfe einer Vakuumpumpe erfolgen kann. Es wäre nicht möglich, den Ventilkörper 6 durch Beaufschlagung der Entlüftungsvorrichtung mit Vakuum gegen die Kraft der Feder 7 von dem Ventilsitz 8 abzuheben. Aus diesem Grunde ist die in den Figuren 1 bis 3 dargestellte Entlüftungsvorrichtung nicht gut zur Vakuumbefüllung geeignet. Der Haltekäfig 15 wird bei dem dargestellten Ausführungsbeispiel durch insgesamt vier axial ausgerichtete Halteklauen 16 gebildet. Die Halteklauen 16 weisen an ihrem unteren Ende nach innen vorstehende Vorsprünge 17 auf, so dass der Ventilkörper 6 gegen die Kraft der Feder 7 an dem Kopfteil 1 des Schraubenkörpers gehalten wird. Der Abstand zwischen den endseitigen Vorsprüngen 17 einander gegenüberliegender Halteklauen 16 ist kleiner als der Durchmesser des Ventilkörpers 6. Die Halteklauen 16 sind um den Entlüftungskanal 5 herum angeordnet. In Umfangsrichtung sind die Halteklauen 16 durch axiale Schlitze voneinander beabstandet. Durch die axialen Schlitze kann die Bremsflüssigkeit bzw. die Luft seitlich an dem kugelförmigen Ventilkörper 6 in der Offenstellung bzw. in der Entlüftungsstellung der Entlüftungsvorrichtung vorbeiströmen.

Die Fix. 5 zeigt das in der Fig.4 dargestellte Ausführungsbeispiel der erfindungsgemäßen Entlüftungsvorrichtung in den verschiedenen Funktionsstellungen. Mit I ist die Schließstellung, mit II die Entlüftungsstellung und mit III die Offenstellung bezeichnet. In der Schließstellung I ist das Kopfteil 1 des Schraubenkörpers an dem Fußteil 2 festgezogen. Der Ventilkörper 6 ist in dieser Stellung zwischen dem konusförmigen Übergangsbereich zwischen Aufnahmeabschnitt 10 und Haltekäfig 15 und dem ebenfalls konusförmig ausgebildeten Ventilsitz 8 eingeklemmt. In der Entlüftungsstellung ist das Kopfteil 1 von dem Fußteil 2 (z. B. durch Drehen um eine halbe Umdrehung) leicht gelöst. In der Entlüftungsstellung ist der Ventilkörper 6 gegen die Kraft der Feder 7 von dem Ventilsitz 8 abhebbar. In der Entlüftungsstellung kann ein Entlüften der Bremsanlage wie oben unter Bezugnahme auf die Figuren 1 bis 3 beschrieben erfolgen. In der Offenstellung III ist das Kopfteil 1 (z. B. durch Drehen um 1,5 Umdrehungen) weiter von dem Fußteil 2 gelöst. In der Offenstellung greifen die endseitigen Vorsprünge 17 des Haltekäfigs 15 an dem Ventilkörper 6 an und heben diesen aktiv von dem Ventilsitz 8 ab. In der Offenstellung ist die Entlüftungsvorrichtung frei durchgängig. Hydraulikfluid oder Luft können durch die in der Fig. 5 nicht dargestellten axialen Schlitze zwischen den Halteklauen 16 hindurch, am Ventilkörper 6 vorbei durch den Entlüftungskanal 5 strömen.

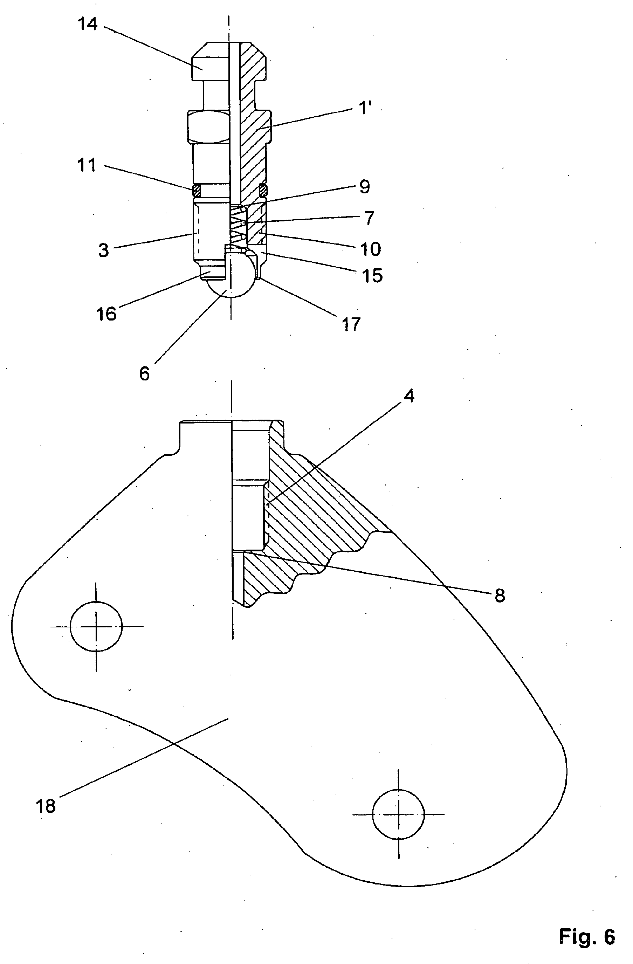

Bei dem in der Fig. 6 dargestellten Ausführungsbeispiel der erfindungsgemäßen Entlüftungsschraube ist der Schraubenkörper der Entlüftungsschraube mit 1' bezeichnet. Das in den Figuren 1 bis 5 dargestellte Fußteil 2 des Schraubenkörpers ist bei dem in der Fig. 6 gezeigten Ausführungsbeispiel gleichsam integral mit einem Bremssattel 18 ausgebildet. Auf diese Weise kann die erfindungsgemäße Entlüftungsvorrichtung bereits bei der Herstellung der Bremsanlage eines Kraftfahrzeuges vorgesehen werden. Die an dem Bremssattel 18 ausgebildete Einschrauböffnung für die Entlüftungsschraube 1' weist den für die Funktion wesentlichen konusförmigen Ventilsitz 8 auf. An der Innenseite der Einschrauböffnung ist das mit dem Außengewinde 3 der Entlüftungsschraube 1' zusammenwirkende Innengewinde 4 vorgesehen. Wesentlich ist, dass der Schraubenkörper 1' an seiner Außenseite eine O-Ring Dichtung 11 aufweist, durch welche der Schraubenkörper 1' in der Einschrauböffnung des Bremssattels 18 dichtend geführt ist. Diese Dichtung vermeidet Undichtigkeiten im Bereich des Gewindes 3 bzw. 4 zwischen Bremse und Schraubenkörper 1'. Es ist somit vor allem dafür gesorgt, dass keine Bremsflüssigkeit unkontrolliert an dem Schraubenkörper 1' vorbei austreten kann. Der Rücktritt von Luft in das Bremssystem beim Entlüftungsvorgang wird bereits durch den Ventilkörper 6 ausreichend wirksam verhindert.

In jedem Fall ist es zweckmäßig, wenn der Schraubenkörper, wie in den Figuren dargestellt, an seinem oberen Ende einen Anschlussnippel 14 zum Aufstecken eines in den Figuren nicht näher dargestellten Entlüftungsschlauchs aufweist. Damit kann, wie oben beschrieben, die ablaufende Bremsflüssigkeit in ein entsprechendes Gefäß geführt werden.

## Patentansprüche

1. Entlüftungsvorrichtung zum Entlüften eines hydraulischen Systems, mit einem Schraubenkörper, der mit dem hydraulischen System verschraubbar ist, und mit einer in dem Schraubenkörper ausgebildeten Ventilanordnung, die einen Ventilkörper (6) umfasst, der in einer Entlüftungsstellung (II) der Entlüftungsvorrichtung gegen die Kraft eines Federelementes (7) von einem Ventilsitz (8) der Ventilanordnung abhebbar ist und der in einer Schließstellung (I) der Entlüftungsvorrichtung an dem Ventilsitz (8) festgelegt ist und so einen Entlüftungsdurchlass verschließt, wobei
- der Schraubenkörper ein Kopfteil (1) und ein mit dem Kopfteil (1) verschraubbares Fußteil (2) umfasst,
- der Entlüftungsdurchlass als axialer Entlüftungskanal (5) ausgebildet ist, der sich durch das Kopfteil (1) und das Fußteil (2) des Schraubenkörpers erstreckt,
- der Ventilkörper (6) in dem Entlüftungskanal (5) axial beweglich geführt ist, und zwar in der Weise, dass in der Entlüflungsstellung (II) Hydraulikfluid oder Luft in dem Entlüftungskanal (5) seitlich an dem Ventilkörper (6) vorbei strömen können,
- der Ventilsitz (8) der Ventilanordnung an dem Fußteil (2) des Schraubenkörpers ausgebildet ist, wobei sich das Federelement (7) an dem Kopfteil (1) abstützt, und
- der Ventilkörper (6) in der Schließstellung (I) durch Festziehen des Kopfteils (1) an dem Fußteil (2) an dem Ventilsitz (8) festlegbar ist,
**dadurch gekennzeichnet,**
**dass** die Entlüftungsvorrichtung durch relatives Verdrehen von Kopfteil (1) und Fußteil (2) aus der Schließstellung (I) in die Entlüftungsstellung (II) und von dort weiter in eine Offenstellung (III) umschaltbar ist, wobei an dem Kopfteil (1) des Schraubenkörpers ein Haltekäfig (15) ausgebildet ist, der den Ventilkörper (6) aufnimmt und endseitige Vorsprünge (17) aufweist, die an dem Ventilkörper (6) angreifen und diesen in der Offenstellung (III) aktiv von dem Ventilsitz (8) abheben, so dass der Entlüftungskanal frei durchgängig ist.

2. Entlüftungsvorrichtung nach Anspruch 1, **dadurch gekennzeichnet, dass** der Haltekäfig (15) wenigstens zwei axial ausgerichtete Halteklauen (16) umfasst, die mit Abstand zueinander um den Entlüftungskanal (5) herum angeordnet sind.

3. Entlüftungsvorrichtung nach Anspruch 1 oder 2, **dadurch gekennzeichnet, dass** der Schraubenkörper an seinem oberen Ende einen Anschlussnippel (14) zum Aufstecken eines Entlüftungsschlauchs aufweist.

4. Entlüftungsvorrichtung nach einem der Ansprüche 1 bis 3, **dadurch gekennzeichnet, dass** das Fußteil (2) einen Gewindeabschnitt (12) zum Einschrauben des Fußteils (2) in das hydraulische System und an seinem unteren Ende einen Dichtkonus (13) zur dichtenden Verbindung mit dem hydraulischen System aufweist.

5. Entlüftungsvorrichtung nach einem der Ansprüche 1 bis 4, **dadurch gekennzeichnet, dass** das Kopfteil (1) und das Fußteil (2) dichtend aneinander geführt sind.

6. Entlüftungsvorrichtung nach einem der Ansprüche 1 bis 5, **dadurch gekennzeichnet, dass** der Ventilkörper (6) kugelförmig ausgebildet ist.

7. Entlüftungsvorrichtung nach einem der Ansprüche 1 bis 6, **dadurch gekennzeichnet, dass** das Federelement (7) eine Schraubenfeder ist.

8. Entlüftungsvorrichtung nach einem der Ansprüche 1 bis 7, **dadurch gekennzeichnet, dass** der Schraubenkörper einen kragenförmigen Aufnahmeabschnitt (10) für die Schraubenfeder (7) aufweist, dessen Durchmesser kleiner ist als der Durchmesser des Ventilkörpers (6), wobei der Ventilkörper (6) in der Schließstellung zwischen einem endseitigen Ringbund des Aufnahmeabschnitts (10) und dem Ventilsitz (8) eingeklemmt ist.

9. Entlüftungsvorrichtung nach einem der Ansprüche 1 bis 8, **dadurch gekennzeichnet, dass** das Fußteil (2) des Schraubenkörpers integral mit einem Bremssattel (18) einer Bremsanlage eines Kraftfahrzeuges ausgebildet ist.

## Claims

1. A venting device for venting a hydraulic system comprising a screw body which can be screwed to the hydraulic system and a valve arrangement which is provided in the screw body and which includes a valve body (6) which can be lifted off a valve seat (8) of the valve arrangement in a venting position (II) of the venting device against the force of a spring element (7) and which in a closed position (I) of the venting device is fixed to the valve seat (8) and thus closes a venting passage, wherein
- the screw body includes a head portion (1) and a base portion (2) which can be screwed to the head portion (1),
- the venting passage is in the form of an axial venting duct (5) extending through the head portion (1) and the base portion (2) of the screw body,
- the valve body (6) is axially movably guided in the venting duct (5), more specifically in such a way that in the venting position (II) hydraulic fluid or air can flow in the venting duct (5) laterally past the valve body (6),
- the valve seat (8) of the valve arrangement is provided on the base portion (2) of the screw body, the spring element (7) bearing against the head portion (1), and
- the valve body (6) can be fixed to the valve seat (8) in the closed position (I) by tightening the head portion (1) to the base portion (2),
**characterised in that**
the venting device can be switched from the closed position (I) into the venting position (II) and from there further into an open position (III) by relative rotation of the head portion (1) and the base portion (2), wherein provided on the head portion (1) of the screw body is a holding cage (15) which accommodates the valve body (6) and has end projections (17) which engage the valve body (6) and actively lift it off the valve seat (8) in the open position so that the venting duct is freely passable.

2. A venting device according to claim 1 **characterised in that** the holding cage (15) has at least two axially oriented holding claws (16) which are arranged at a mutual spacing around the venting duct (5).

3. A venting device according to claim 1 or claim 2 **characterised in that** at its upper end the screw body has a connecting nipple (14) for fitting a venting hose thereon.

4. A venting device according to one of claims 1 to 3 **characterised in that** the base portion (2) has a screwthreaded part (12) for screwing the base portion (2) into the hydraulic system and at its lower end it has a sealing cone (13) for sealing connection to the hydraulic system.

5. A venting device according to one of claims 1 to 4 **characterised in that** the head portion (1) and the base portion (2) are guided sealingly against each other.

6. A venting device according to one of claims 1 to 5 **characterised in that** the valve body (6) is of a spherical shape.

7. A venting device according to one of claims 1 to 6 **characterised in that** the spring element (7) is a coil spring.

8. A venting device according to one of claims 1 to 7 **characterised in that** the screw body has a collar-shaped receiving portion (10) for the coil spring (7), the diameter of the portion (10) being smaller than the diameter of the valve body (6), wherein in the closed position the valve body (6) is clamped between an annular end collar of the receiving portion (10) and the valve seat (8).

9. A venting device according to one of claims 1 to 8 **characterised in that** the base portion (2) of the screw body is formed integrally with a brake calliper (18) of a braking installation of a motor vehicle.

## Revendications

1. Dispositif de purge d'air pour purger l'air d'un système hydraulique, comprenant un corps de vis pouvant se visser sur le système hydraulique et un ensemble de soupape réalisé dans le corps de vis et comprenant un corps de soupape (6) qui, dans une position de purge d'air (II) du dispositif de purge d'air, peut être soulevé d'un siège de soupape (8) de l'ensemble de soupape contre la force d'un élément de ressort (7) et qui, dans une position de fermeture (I) du dispositif de purge d'air, est immobilisé contre le siège de soupape (8) et ferme ainsi un passage de purge d'air, dans lequel
- le corps de vis comprend une partie de tête (1) et une partie de pied (2) pouvant se visser sur la partie de tête (1),
- le passage de purge d'air est réalisé comme un canal de purge d'air axial (5) qui s'étend à travers la partie de tête (1) et la partie de pied (2) du corps de vis,
- le corps de soupape (6) est guidé de façon axialement mobile dans le canal de purge d'air (5), notamment de telle sorte que dans la position de purge d'air (II), un fluide hydraulique ou de l'air dans le canal de purge d'air (5) peut contourner latéralement le corps de soupape (6),
- le siège de soupape (8) de l'ensemble de soupape est réalisé au niveau de la partie de pied (2) du corps de vis, l'élément de ressort (7) prenant appui sur la partie de tête (1), et
- le corps de soupape (6) dans la position de fermeture (I) peut être immobilisé contre le siège de soupape (8) par le serrage de la partie de tête (1) contre la partie de pied (2),
**caractérisé en ce que** le dispositif de purge d'air peut être commuté par une rotation relative de la partie de tête (1) et de la partie de pied (2) de la position de fermeture (I) vers la position de purge d'air (II) et de celle-ci vers une position d'ouverture (III), une cage de retenue (15) étant réalisée sur la partie de tête (1) du corps de vis, ladite cage recevant le corps de soupape (6) et présentant des saillies (17) côté extrémité qui s'appliquent au corps de soupape (6), et dans la position d'ouverture (III), le soulèvent activement du siège de soupape (8) de sorte que le passage du canal de purge d'air est libre.

2. Dispositif de purge d'air selon la revendication 1, **caractérisé en ce que** la cage de retenue (15) comprend au moins deux griffes de retenue (16) orientées axialement et disposées de façon espacée entre elles autour du canal de purge d'air (5).

3. Dispositif de purge d'air selon la revendication 1 ou 2, **caractérisé en ce que** le corps de vis présente à son extrémité supérieure un raccord (14) pour l'emmanchement d'un tuyau de purge d'air.

4. Dispositif de purge d'air selon l'une quelconque des revendications 1 à 3, **caractérisé en ce que** la partie de pied (2) présente une portion filetée (12) pour visser la partie de pied (2) dans le système hydraulique et présente à son extrémité inférieure un cône d'étanchéité (13) pour un raccordement étanche avec le système hydraulique.

5. Dispositif de purge d'air selon l'une quelconque des revendications 1 à 4, **caractérisé en ce que** la partie de tête (1) et la partie de pied (2) sont amenées l'une contre l'autre de façon étanche.

6. Dispositif de purge d'air selon l'une quelconque des revendications 1 à 5, **caractérisé en ce que** le corps de soupape (6) est réalisé de façon sphérique.

7. Dispositif de purge d'air selon l'une quelconque des revendications 1 à 6, **caractérisé en ce que** l'élément de ressort (7) est un ressort hélicoïdal.

8. Dispositif de purge d'air selon l'une quelconque des revendications 1 à 7, **caractérisé en ce que** le corps de vis présente une portion de réception (10) en forme de collerette pour le ressort hélicoïdal (7), dont le diamètre est inférieur au diamètre du corps de soupape (6), le corps de soupape (6) dans la position de fermeture étant bloqué entre un épaulement annulaire côté extrémité de la portion de réception (10) et le siège de soupape (8).

9. Dispositif de purge d'air selon l'une quelconque des revendications 1 à 8, **caractérisé en ce que** la partie de pied (2) du corps de vis est réalisée d'une seule pièce avec un étrier de frein (18) d'un système de freinage d'un véhicule automobile.
